# EUROPEAN PATENT SPECIFICATION

(11) **EP 3 723 447 B1**
(45) Date of publication and mention of the grant of the patent: **16.08.2023**
(21) Application number: 19747828.2
(22) Date of filing: 03.01.2019
(51) Int. Cl.: H04W 88/04, H04W 72/04

(54) **RELAY TRANSMISSION METHOD AND DEVICE**
RELAISÜBERTRAGUNGSVERFAHREN UND -VORRICHTUNG
PROCÉDÉ ET DISPOSITIF DE TRANSMISSION DE RELAIS

(30) Priority: 05.02.2018 CN 201810109639
(43) Date of publication of application: 14.10.2020
(73) Proprietor: HUAWEI TECHNOLOGIES CO., LTD., Shenzhen, Guangdong 518129 (CN)
(72) Inventor: QIN, Yi, Shenzhen, Guangdong 518129 (CN); ZHUO, Yibin, Shenzhen, Guangdong 518129 (CN); LI, Zhongfeng, Shenzhen, Guangdong 518129 (CN); SUN, Yu, Shenzhen, Guangdong 518129 (CN)
(74) Representative: Pfenning, Meinig & Partner mbB
(86) International application number: PCT/CN2019/070194
(87) International publication number: WO 2019/149023

(56) References cited:
- WO-A1-2016/161853
- CN-A- 101 374 326
- CN-A- 105 636 115
- CN-A- 107 113 713
- KR-A- 20130 004 847
- MOTOROLA: "HeNB Interference Coordination", 3GPP DRAFT; R1-094839 - HENB INTERFERENCE COORDINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 8 November 2009 (2009-11-08), XP050389230, [retrieved on 2009-11-04]
- "3rd Generation Partnership Project; Technical Specification Group Radio Access Network NR Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.0.0, 4 January 2018 (2018-01-04), pages 1-188, XP051392365, [retrieved on 2018-01-04]

## Description

### TECHNICAL FIELD

The present invention relates to the field of communications technologies, and in particular, to a relay transmission method and apparatus.

### BACKGROUND

In a next-generation communications system, due to introduction of high-frequency communication, coverage reduction and a coverage hole that are caused by blocking become new challenges. To improve coverage of a base station, relay transmission is introduced. A non-line of sight (non-line of sight, NLOS) channel is converted into a line of sight (line of sight, LOS) channel through relay transmission, thereby improving stability and a throughput of a system. In a relay communication process, there are three types of network nodes: a base station, a relay node, and a terminal. The relay node is a new node introduced in a network, and some new connection links need to be added for the relay node. In a base station cell in which a relay exists, connection links may be classified, based on different service objects of the links, into the following three types: an access (access, AC) link, a direct link, and a backhaul (backhaul, BH) link. The direct link is used for communication between the base station and a nearby terminal, the access link is used for mutual communication between the relay node and a terminal served by the relay node, and the backhaul link is used for communication between the relay node and the base station. That the relay node receives data from the base station may be considered as BH downlink transmission, and that the relay node sends the data to the base station may be considered as BH uplink transmission. The BH uplink transmission and the BH downlink transmission may be collectively referred to as BH transmission. That the relay node or the base station sends the data to the terminal may be considered as AC downlink transmission, and that the relay node or the base station receives the data from the terminal may be considered as AC uplink transmission. The AC uplink transmission and the AC downlink transmission may be collectively referred to as AC transmission.

In LTE, a terminal cannot distinguish between the relay node and the base station. The relay node forwards the data transmitted between the base station and the terminal. In a forwarding process, each relay node has its own cell identifier (identifier, ID), which may be different from a cell ID of the base station. When the terminal needs to be handed over from one relay node to another relay node, a method the same as that for inter-cell handover needs to be used.

Specifically, the terminal needs to determine, based on a measurement report, that link quality of the current cell is lower than link quality of a neighboring cell, to initiate an initial access process to the neighboring cell. The measurement report is obtained based on reference signal measurement and through long-term statistics collection. The initial access process includes the following steps.

Step 1: Receive a synchronization signal; obtain, based on the synchronization signal, downlink time synchronization of the neighboring cell and cell broadcast information of the neighboring cell, including a cell ID and the like; and determine a CRS sequence of the neighboring cell based on the cell ID of the neighboring cell, and measure the neighboring cell.

Step 2: Send a PRACH to a base station of the neighboring cell; and initiate uplink access by sending the PRACH, so that the base station obtains a round-trip transmission delay of the terminal.

Step 3: Receive a random access response; and the base station allocates a timing advance (timing advance, TA) to the terminal by using the random access response, and allocates a temporary cell-radio network temporary identifier (temporary cell-radio network temporary identifier, TC-RNTI).

Step 4: The terminal sends a message 3 (Msg3); and the terminal reports initial access information by using the message 3.

Step 5: The terminal receives a message 4 (Msg4). The message 4 is used to determine that the terminal performs access, resolve a conflict due to simultaneous access by a plurality of terminals, and allocate or determine a cell radio network temporary identifier (cell-radio network temporary identifier, C-RNTI) of the terminal.

In the next-generation communications system, a frequency band is extended from a low frequency band to a high frequency band, so that larger transmission bandwidth can be obtained, and a system throughput can be increased. However, in the high frequency band, channel stability is relatively poor compared with that in the low frequency band, and a blockage (blockage) easily occurs. The blockage occurs suddenly and lasts for a short period of time. If the relay node is handed over by using an existing method, a case in which the handover of the relay node is not completed but a channel blockage is ended may occur.
WO 2016/161853 A1 describes a relay node switching method and system. The method comprises: a source base station of a D2D relay node or an MME sending relevant information about the D2D relay node to a target base station, and the target base station processing correspondingly according to the relevant information about the D2D relay node. MOTOROLA, "HeNB Interference Coordination", 3GPP DRAFT; R1-094839 - (20091108), proposes using UEs connected to macro-eNBs for relaying coordination information from the macro-eNB to a HeNB. 3rd Generation Partnership Project: *"*Technical Specification Group Radio Access Network NR Radio Resource Control (RRC) protocol specification (Release 15)"; 3GPP TS 38.331, (20180104) specifies the RRC protocol.

### SUMMARY

An embodiment of this application provides a relay transmission method. In the method, information is shared with each other, so that a terminal may be quickly handed over between relay nodes.

According to a first aspect, an embodiment of this application provides a relay transmission method. The method includes: receiving, by a first relay node, first information, where the first information includes information about a second resource of a second relay node; and sending, by the first relay node, second information to a terminal, where the second information includes the information about the second resource. After obtaining the information about the second resource of the second relay node, the terminal may be handed over to the second relay node based on the information about the second resource. Further, the second information further includes information about a first resource of the first relay node. The method further includes: receiving, by the terminal, the second information from the first relay node; and sending, by the terminal, a message to the second relay node based on a signal received from the second resource, where the message is used to carry information about a part of the second resource. The first resource includes at least one of a synchronization signal block SSB resource, a channel state information-reference signal CSI-RS resource, a physical random access channel PRACH resource, a physical uplink control PUCCH resource, and a preamble sequence that are used for transmission between the first relay node and the terminal. the second resource includes at least one of the SSB resource, the CSI-RS resource, the PRACH resource, the PUCCH resource, and the preamble sequence that are used for transmission between the second relay node and the terminal. The second information further includes a beam failure trigger threshold, a maximum quantity of times of retransmission, a maximum quantity of times of power rampings, target received power, a retransmission power step, a time length of a beam failure measurement window, and a control resource set CORESET of a received beam failure recovery response that are of the second relay node.

The first relay node is a relay node that currently communicates with the terminal. The first relay node may configure total resources including the first resource and the second resource for the terminal. The terminal selects a suitable resource from the total resource for communication. If the selected resource belongs to a resource of the first relay node, the terminal continues to communicate with the first relay node, and no handover occurs. If the selected resource belongs to a resource of the second relay node, the terminal communicates with the second relay node. This is equivalent to that the terminal is handed over from the first relay node to the second relay node. Through configuration of an upper-level node, the first relay node or the second relay node skips transmitting a signal on or mapping a channel to another resource other than the resource configured for the first relay node or the second relay node. In this way, the terminal may be handed over from one relay node to another relay node when the relay node needs to handed over. This handover manner enables the terminal to be quickly handed over between relay nodes, and adapts to a high frequency band blockage which is easy to occur and lasts for a short time.

(deleted) .

(deleted)

In a design manner, the method further includes: receiving, by the first relay node, the first information from a third node or the second relay node. The third node is an upper-level node of the second relay node. For example, the third node is a base station or another relay.

In a design manner, the first relay node skips mapping a signal and/or a channel to the second resource. Specifically, the first relay node skips transmitting data on or skips mapping a physical downlink data channel PDSCH to the second resource. In this way, interference caused by the first relay node on communication between the terminal and the second relay node may be avoided or reduced.

In a design manner, the terminal skips mapping a signal and/or a channel to the second resource. Specifically, the terminal skips transmitting data on or skips mapping a physical downlink data channel PDSCH to the second resource. In this way, interference caused by the first relay node on communication between the terminal and the second relay node may be avoided or reduced.

(deleted)

After obtaining the information about the second resource of the second relay node, the terminal may be handed over to the second relay node based on the information about the second resource. In a design manner, the terminal sends a message to the second relay node based on signals received from the first resource and the second resource, where the message is used to carry information about a part of the second resource.

The first relay node is a relay node that currently communicates with the terminal. The first relay node may configure total resources including the first resource and the second resource for the terminal. The terminal selects a suitable resource from the total resource for communication. If the selected resource belongs to a resource of the first relay node, the terminal continues to communicate with the first relay node, and no handover occurs. If the selected resource belongs to a resource of the second relay node, the terminal communicates with the second relay node. This is equivalent to that the terminal is handed over from the first relay node to the second relay node. Through configuration of an upper-level node, the first relay node or the second relay node skips transmitting a signal on or mapping a channel to another resource other than the resource configured for the first relay node or the second relay node. In this way, the terminal may be handed over from one relay node to another relay node when the relay node needs to handed over. This handover manner enables the terminal to be quickly handed over between relay nodes, and adapts to a high frequency band blockage which is easy to occur and lasts for a short time.

In a design manner, the first relay node skips transmitting and mapping a signal and/or a channel to the second resource. Specifically, the first relay node skips transmitting data on or skips mapping a physical downlink data channel PDSCH to the second resource. In this way, interference caused by the first relay node on communication between the terminal and the second relay node may be avoided or reduced.

In a design manner, the terminal skips mapping a signal and/or a channel to the second resource. Specifically, the terminal skips transmitting data on or skips mapping a physical downlink data channel PDSCH to the second resource. In this way, interference caused by the first relay node on communication between the terminal and the second relay node may be avoided or reduced.

According to a second aspect, an embodiment of this application provides a system comprising a relay transmission apparatus and a terminal. The apparatus includes: a receiving module, configured to receive first information by a first relay node, where the first information includes information about a second resource of a second relay node; a sending module, configured to send, by the first relay node, second information to a terminal, where the second information includes the information about the second resource. Further, the second information further includes information about a first resource of the first relay node. The apparatus is the first relay node. The further relay transmission apparatus is a terminal and comprises: a receiving module, configured to receive, by the terminal, the second information from the first relay node; and a sending module, configured to send, by the terminal, a message to the second relay node based on signals received from the first resource and the second resource, wherein the message is used to carry information about a part of the second resource. The second information further includes a beam failure trigger threshold, a maximum quantity of times of retransmission, a maximum quantity of times of power rampings, target received power, a retransmission power step, a time length of a beam failure measurement window, and a control resource set CORESET of a received beam failure recovery response that are of the second relay node

The first resource includes at least one of a synchronization signal block SSB resource, a channel state information-reference signal CSI-RS resource, a physical random access channel PRACH resource, a physical uplink control PUCCH resource, and a preamble sequence that are used for transmission between the first relay node and the terminal.

The second resource includes at least one of the SSB resource, the CSI-RS resource, the PRACH resource, the PUCCH resource, and the preamble sequence that are used for transmission between the second relay node and the terminal.

In a design manner, the receiving module is further configured to receive, by the first relay node, the first information from a third node or the second relay node, where the third node is an upper-level node of the second relay node.

In a design manner, the first relay node skips mapping a signal and/or a channel to the second resource.

In a design manner, the terminal skips mapping a signal and/or a channel to the second resource.

(deleted)

In a design manner, the terminal sends a message to the second relay node based on signals received from the first resource and the second resource, where the message is used to carry information about a part of the second resource. The apparatus may be the terminal.

(deleted)

(deleted)

In a design manner, the first relay node skips transmitting and mapping a signal and/or a channel to the second resource. Specifically, the first relay node skips transmitting data on or skips mapping a physical downlink data channel PDSCH to the second resource. In this way, interference caused by the first relay node on communication between the terminal and the second relay node may be avoided or reduced.

In a design manner, the terminal skips mapping a signal and/or a channel to the second resource. Specifically, the terminal skips transmitting data on or skips mapping a physical downlink data channel PDSCH to the second resource. In this way, interference caused by the first relay node on communication between the terminal and the second relay node may be avoided or reduced.

(deleted)

(deleted)

(deleted)

(deleted)

(deleted)

The system according to the second aspect may further comprise the first relay node, and the second relay node

It should be noted that in this embodiment of this application, the terminal is mainly used as a lower-level node of the first relay node/second relay node. However, the terminal may also be replaced with another relay node. In other words, the another relay node may also be handed over from the first relay node to the second relay node by using the method provided in this application. The another relay node is the lower-level node of the first relay node.

In this embodiment of this application, the information about the second relay node is shared with the first relay node, so that the terminal can be quickly handed over from the first relay node to the second relay node.

### BRIEF DESCRIPTION OF DRAWINGS

FIG. 1 is a schematic architectural diagram of a wireless communications system according to an embodiment;
FIG. 2 is a schematic flowchart of a relay transmission method according to an embodiment;
FIG. 3 is a schematic flowchart of a relay transmission method according to an embodiment;
FIG. 4 is a schematic diagram of total SSB resources, of a relay node 1 and a relay node 2, that are configured by a base station;
FIG. 5 is a possible schematic structural diagram of a first relay node or a terminal comprised by a system according to an embodiment; and
FIG. 6 is a possible schematic logical structural diagram of a first relay node or a terminal comprised by a system according to an embodiment.

### DESCRIPTION OF EMBODIMENTS

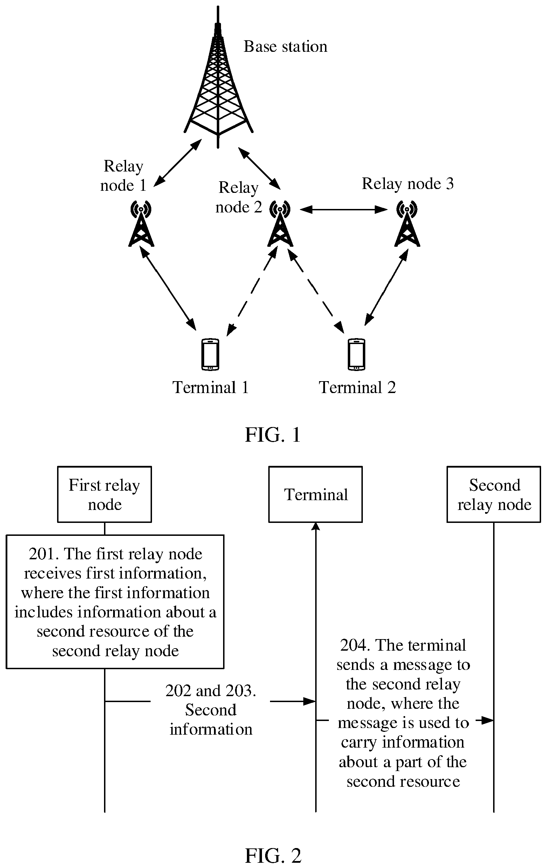

FIG. 1 is a schematic architectural diagram of a wireless communications system according to an embodiment. As shown in FIG. 1, the wireless communications system includes a base station, a relay node, and a terminal.
The terminal may be connected to the base station in a wireless manner, and perform data transmission with the base station. The terminal may also be connected to the relay node in a wireless manner, and perform data transmission with the relay node. In FIG. 1, a backhaul link exists between the base station and a relay node 1 and between the base station and a relay node 2, an access link exists between the relay node 1 and a terminal 1, an access link exists between a relay node 3 and a terminal 2, and a backhaul link directly exists between the relay node 2 and the relay node 3. The terminal 1 in FIG. 1 may be handed over to the relay node 2. In other words, the terminal 1 disconnects the access link to the relay node 1 and establishes the access link to the relay node 2. The terminal 2 may also be handed over from the relay node 3 to the relay node 2. FIG. 1 is merely a schematic diagram. The communications system may further include another network device. For example, the communications system may further include more base stations, more relay nodes, and more terminals.

The base station in the embodiments of this application is an access device used by the terminal to access the wireless communications system in a wireless manner, and may be an evolved NodeB, a base station in a next-generation communications system, an access node in a WiFi system, or the like. The relay node in this embodiment of this application may be a node having a relay function. Specifically, the relay node may be a base station, a micro base station, a transmission reception point (transmission reception point, TRP), customer premises equipment (customer premise equipment, CPE), or user equipment. The relay node may operate in a low frequency band or a high frequency band.

The terminal in the embodiments of this application may also be referred to as a terminal device, user equipment (user equipment, UE), a mobile station (mobile station, MS), a mobile terminal (mobile terminal, MT), or the like. The terminal may be a mobile phone (mobile phone), a pad (Pad), a computer having a wireless transceiver function, another terminal having a wireless transceiver function, or the like.

A slot in this embodiment includes a period of time resource, or may be a transmission time interval (transmission time internal, TTI), a time unit, a subframe, and/or a mini slot.

In the prior art, beam failure frequently occurs, which greatly interferes with a normal communication procedure. Embodiments of this application provide a beam failure recovery method for a case in which the existing beam failure frequently occurs. The beam failure recovery method is used to implement quick beam switching. Specifically, the beam failure recovery method includes the following several steps.

Step 1: The terminal determines whether a beam failure occurs; and the terminal determines, based on whether a beam of a control channel is completely failure, whether the beam failure occurs.

Step 2: If the beam failure occurs, the terminal determines a new beam based on a measurement signal, for example, a synchronization signal block (synchronization signal block, SSB) or a periodic channel state information-reference signal (channel state information-reference signal, CSI-RS). Certainly, the measurement signal may be preconfigured by the base station.

Step 3: The terminal reports the beam failure recovery request by using a physical random access channel (physical random access channel, PRACH), where the beam failure recovery request carries information about a new beam and an identifier of the terminal.

Step 4: The terminal detects a physical uplink control channel (physical uplink control channel, PUCCH), and receives a response of the base station to the beam failure recovery request; and the terminal performs beam failure recovery based on the response of the base station.

In a next-generation communications system, especially in a high-frequency scenario, channel blockage frequently occurs and lasts for a short time. The existing cell handover process is slow. When the terminal needs to be handed over from one relay node to another relay node, the existing cell handover method cannot meet a requirement. For example, if a handover speed between relay nodes is relatively slow, a case in which the channel blockage has ended before the handover of the relay nodes is completed may occur. Therefore, the handover between the relay nodes needs to be performed quickly.

The foregoing beam failure recovery method may be considered as inter-beam handover. For example, a failure beam may be switched to a beam that may be used for communication. However, the two beams are beams of a same base station, so that the handover is not an inter-base station or inter-cell handover. The relay node may also be considered as a base station. Therefore, to implement quick handover between the relay nodes, beams of a plurality of relay nodes need to be considered together. In this way, that a beam of one relay node is switched to a beam of another relay node is equivalent to that one relay node is handed over to another relay node. If the beams of the plurality of relay nodes are considered together, a relay node on which the channel blockage occurs is required to obtain a measurement signal or related resource information of another relay node. The following further describes the handover between the relay nodes.

FIG. 2 is a schematic flowchart of a relay transmission method according to an embodiment of this application. As shown in FIG. 2, the method includes the following steps.

Step 201: A first relay node receives first information, where the first information includes information about a second resource of a second relay node.

The first relay node may receive the first information from an upper-level node of the first relay node, or may directly receive the first information from the second relay node.

Step 202: The first relay node sends second information to a terminal, where the second information includes the information about the second resource. Further, the second information further includes information about a first resource of the first relay node.

The first resource includes at least one of an SSB resource, a channel state information reference-signal CSI-RS resource, a PRACH resource, a PUCCH resource, and a preamble (preamble) sequence that are used for transmission between the first relay node and the terminal (or another network node). The second resource includes at least one of the SSB resource, the CSI-RS resource, the PRACH resource, the PUCCH resource, and the preamble sequence that are used for transmission between the second relay node and the terminal (or another network node). Configuration information of the preamble sequence may further include at least one of information about a root sequence of the preamble sequence, information about a cyclic shift, and an identifier of the preamble sequence. Further, the first information may further include a beam failure (or beam failure) trigger threshold, a maximum quantity of times of retransmission, a maximum quantity of times of power rampings, and target received power, a retransmission power step (retransmission tx power ramping step size), a time length of a beam failure measurement window (beam failure recovery timer), and a control resource set (control resource set, CORESET) of a received beam failure recovery response that are of the second relay node. The second information may further include a beam failure trigger threshold, a maximum quantity of times of retransmission, a maximum quantity of times of power rampings, target received power, a retransmission power step, a time length of a beam failure measurement window, and a CORESET of a received beam failure recovery response that are of the first relay node and the second relay node.

In an example, the first relay node receives the first information from a base station, or the base station sends the information about the first resource and the information about the second resource to the first relay node. For example, when configuring the first relay node, the base station may send, to the first relay node, information about the SSB resource, the CSI-RS resource, the PRACH resource, or the PUCCH resource that is used for transmission between the first relay node and the terminal, and may further send, to the first relay node, information about the SSB resource, the CSI-RS resource, the PRACH resource, or the PUCCH resource that is used for transmission between the second relay node and the terminal. In another example, the first relay node receives the first information from the second relay node. Alternatively, the first relay node receives the information about the second resource from the base station.

The second information includes information about the first resource and the second resource. The first relay node sends the second information to the terminal. This allows the terminal to obtain a resource available for the first relay node and a resource available for the second relay node. The first relay node is transmitted only with the terminal on the first resource, and the first relay node is not transmitted on the second resource. Specifically, the first relay node does not map a physical downlinl share channel (physical downlink share channel, PDSCH) to the second resource. For example, the first relay node sends the information about the SSB resource or the CSI-RS resource to the terminal. The SSB resource or CSI-RS resource includes more SSB resources or CSI-RS resources than required for the first relay node to be actually transmitted with the terminal. Specifically, the first relay node may send information about a plurality of groups of SSB resources or CSI-RS resources. The first relay node sends the SSB or the CSI-RS on one of the groups, and does not transmit data on or map the PDSCH on the remaining groups.

The relay transmission method provided in this embodiment of this application is described from the perspective of the first relay node. The relay transmission method is described from the perspective of the terminal in the following.

Step 203: The terminal receives the second information from the first relay node, where the second information includes information about the second resource of the second relay node. Further, the second information further includes information about the first resource of the first relay node.

Step 204: The terminal sends a message to the second relay node based on signals received by the terminal from the first resource and the second resource, where the message is used to carry information about a part of the second resource. Because the message carries the information about a part of the second resource, the second relay node may learn of that the terminal selects the second relay node as a relay node to communicate with the terminal.

The second information may further include the beam failure trigger threshold, a maximum quantity of times of retransmission, a maximum quantity of times of power rampings, target received power, a retransmission power step, a time length of a beam failure measurement window, and a CORESET that receives a response that are of the first relay node and the second relay node.

In this application, the base station may configure a group of SSB resources, CSI-RS resources, PRACH resources, or PUCCH resources for a plurality of relay nodes, and configure each relay node to perform transmission on only some of the resources. Through configuration of the base station, the plurality of relay nodes do not transmit signals on resources other than the resources configured for the plurality of relay nodes. One relay node configures the terminal to perform joint measurement on signals of the plurality of relay nodes, and the terminal may select, based on a measurement result, a suitable relay node from the plurality of relay nodes to perform communication. In this way, the terminal may be handed over from one relay node to another relay node when the relay node needs to handed over. This handover manner enables the terminal to be quickly handed over between relay nodes, and adapts to a high frequency band blockage which is easy to occur and lasts for a short time. The following is an example of a scenario in FIG. 1, which provides a further description of the relay transmission method provided in this embodiment of this application. The terminal is connected to a relay node 1.

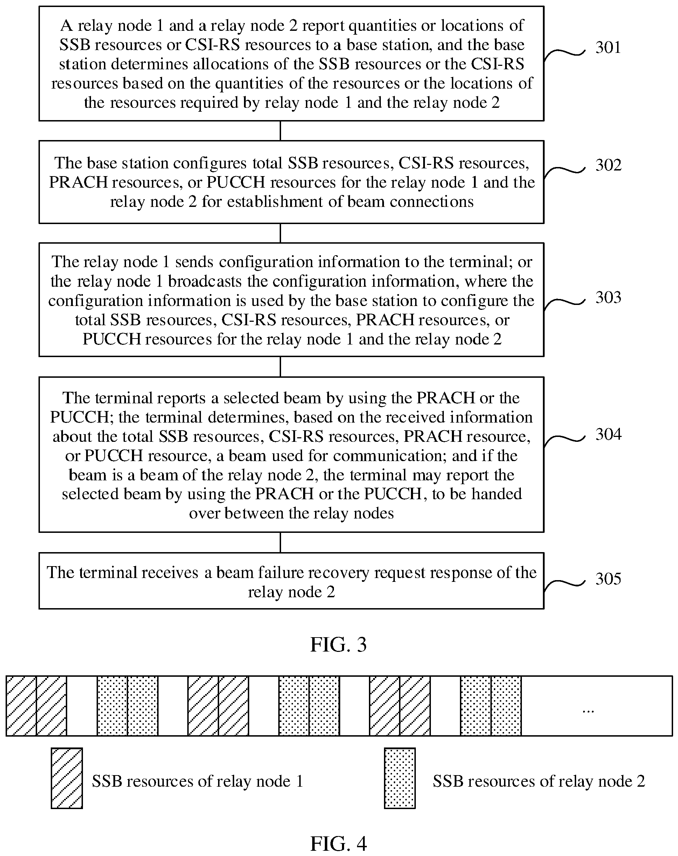

FIG. 3 is a schematic flowchart of a relay transmission method according to an embodiment of this application. As shown in FIG. 3, the method includes the following steps.

Step 301: A relay node 1 and a relay node 2 report quantities or locations of SSB resources or CSI-RS resources to a base station, and the base station determines allocations of the SSB resources or the CSI-RS resources based on the quantities of the resources or the locations of the resources required by the relay node 1 and the relay node 2. This step is optional, because the SSB resources or the CSI-RS resources of the relay node 1 and the relay node 2 may be directly configured by the base station.

Step 302: The base station configures total SSB resources, CSI-RS resources, PRACH resources, or PUCCH resources for the relay node 1 and the relay node 2 for establishment of beam connections.

The base station instructs the relay node 1 and the relay node 2 to respectively send an SSB or a CSI-RS on some of the configured total SSB resources or CSI-RS resources. The base station instructs the relay node 1 and the relay node 2 to respectively receive a PRACH or a PUCCH on some of the configured total PRACH resources or PUCCH resources. Some of the resources refer to resources used by the relay node 1 or the relay node 2 to send the SSB or the CSI-RS and receive the PRACH or the PUCCH. Some of the resources may also be configured by the base station. The total resources configured by the base station include the SSB resources, the CSI-RS resources, the PRACH resources or the PUCCH resources of all relay nodes that may be quickly handed over (for example, the relay node 1 and the relay node 2 in this embodiment). The relay node that may be quickly handed over may be one or more relay nodes to report whether they can be used for quickly handover. Alternatively, the base station as a whole controls whether one or more relay nodes may be used for quick handover. FIG. 4 is described by using SSB resources as an example.

FIG. 4 is a schematic diagram of total SSB resources, of a relay node 1 and a relay node 2, that are configured by a base station. As shown in FIG. 4, an SSB may be used as an example for entire transmission resources. Diagonal boxes represent SSB resources of the relay node 1, and dot boxes represent SSB resources of the relay node 2. In this case, the diagonal boxes and the dot boxes together represent the total SSB resources of the relay node 1 and the relay node 2 that are configured by a base station. The relay node 1 performs transmission only on the SSB resources (shown by the diagonal box in FIG. 4) of the relay node 1, but the base station sends the total SSB resources (including the SSB resources of the relay node 2) to the relay node 1. Similarly, the relay node 2 may also receive the total SSB resources (including the SSB resources of the relay node 1) from the base station.

In an example, signal periodicities of the relay node 1 and the relay node 2 are the same. In this way, only one periodicity value may be configured for a terminal. If the signal periodicities of the relay node 1 and the relay node 2 are different, signal measurement needs to be performed based on a larger signal periodicity. In this way, resources of the relay node with a smaller signal period are wasted.

In an example, synchronization signals in the SSB are generated based on a cell ID, and a sequence of a CSI-RS is generated based on the cell ID or a virtual cell ID. Therefore, the base station may send the cell ID or the virtual cell ID to the relay node 1 and/or the relay node 2, to generate the synchronization signals or the sequence of the CSI-RS. If each relay node independently determines a cell ID of the relay node, for a synchronization signal, the base station needs to indicate an ID of another relay node; and for a CSI-RS, the base station needs to indicate the virtual ID. If the cell ID for each relay node is configured by the base station, the base station can configure the same cell ID for each relay node.

In an example, when beam quality measurement is performed on the relay node 2 in a manner of combining the CSI-RS and the SSB, the relay node 2 further needs to report a quasi co-located (quasi co-located, QCL) relationship between the CSI-RS and the SSB, and the quasi co-located relationship is configured by the base station for the relay node 1. The CSI-RS and the SSB with the QCL relationship can be used for joint beam quality measurement. To be specific, for the measurement method of combining the CSI-RS and the SSB, the terminal may consider that a measurement result of a CSI-RS and a measurement result of an SSB may be combined. Alternatively, the measurement result of the CSI-RS can be used as a reference for the measurement result of the SSB. In this case, the base station is required to configure the CSI-RS and the SSB to be of the QCL.

Step 303: The relay node 1 sends configuration information to the terminal. Alternatively, the relay node 1 broadcasts the configuration information. The configuration information is used by the base station to configure the total SSB resources, CSI-RS resources, PRACH resources, or PUCCH resources for the relay node 1 and the relay node 2.

The resources indicated by the configuration information include and are more than resources required by the relay node 1 for actually sending an SSB or a CSI-RS and receiving a PRACH or a PUCCH.

In an example, the relay node 1 configures a plurality of types of parameter signaling, for example, SSB-transmitted signaling. Among a plurality of types of SSB-transmitted signaling, one type is used for quick handover between relay nodes. Optionally, there is another type used to configure the relay node 1 for actually sending the SSB, or still another type used for beam failure recovery within the relay node 1.

In an example, the relay node 1 may divide all configurable SSBs of the relay node 1 into different sets, respectively corresponding to SSBs from the relay node 1 and the relay node 2. The SSBs in different sets correspond to different parameters, that is, different parameters may be configured for different relay nodes (or different signal sets). The parameter includes at least one of a preamble sequence transmitted on a PRACH, a maximum quantity of times of retransmission of a beam failure recovery request, a maximum quantity of times of power rampings, target received power, a retransmission power step, or a time length of a beam failure measurement window. For different cell IDs, different SSB sets correspond to different cell IDs. Generation of the synchronization signals in the SSBs is based on the cell IDs. Therefore, if the relay node 1 and the relay node 2 correspond to different cell IDs, two sets may be obtained through division, and each set includes the SSBs of the two relay nodes. Sequences of synchronous signals in each set are the same, and sequences of synchronous signals between sets are different.

In an example, CSI-RSs may be configured to belong to different CSI-RS resource sets, respectively corresponding to CSI-RSs from the relay node 1 and the relay node 2. The different CSI-RS resource sets may correspond to different parameters.

In an example, different thresholds may be configured for different signal sets (for example, different SSB sets or different CSI-RS sets). Based on this threshold, whether handover between relay nodes is performed is determined. For example, switching between different signals in each signal set represents beam switching within a relay node. Handover, switching between different signals in different sets represents handover between the relay nodes. A threshold (for example, a relatively large threshold) is set for the switching between different signals in different sets, to ensure that the handover between the relay nodes does not frequently occur.

In an example, different parameters may be configured for different relay nodes (or different signal sets). Because a parameter of each relay node is determined based on a cell covered by the relay node, different relay nodes may determine different parameters, and different PRACH parameters are configured for access to different relay nodes. These parameters need to be reported by the relay node 2 to the base station, and then configured by the base station for the relay node 1.

In the total resources configured by the base station, if a resource not used by the relay node 1 to transmit an SSB, a CSI-RS, a PRACH, or a PUCCH is configured to be used for quick handover between the relay nodes, the relay node 1 does not transmit any signal on the resource. These resources may be at a resource element (resource element, RE) level or a symbol level. Using the scenario shown in FIG. 4 as an example, the relay node 1 does not transmit any signal on the SSB resources of the relay node 2.

Step 304: The terminal reports a selected beam by using the PRACH or the PUCCH. The terminal determines, based on the received information about the total SSB resources, CSI-RS resources, PRACH resource, or PUCCH resource, a beam used for communication. If the beam is a beam of the relay node 2, the terminal may report the selected beam by using the PRACH or the PUCCH, to be handed over between the relay nodes.

Step 305: The terminal receives a beam failure recovery request response of the relay node 2.

The relay node 1 and the relay node 2 report, to the base station, information about a CORESET that may be used to send a beam failure recovery request response. The CORESET configured by the base station for the relay node 1 and the relay node 2 to send the beam failure recovery request response is, for example, a union set of a CORESET allocated to the relay node 1 and a CORESET allocated to the relay node 2.

The relay node 1 preconfigures, for the terminal, a CORESET used by the terminal to receive the beam failure recovery request response. At least two CORESETs are included or a larger CORESET is included. The preconfigured CORESET includes at least a resource used by the terminal to receive the beam failure recovery request response sent by the relay node 2. To ensure that the terminal can quickly recover from the beam failure, the relay node 1 needs to preconfigure, for the terminal, the resource of the received beam failure recovery response, including the resource of the received response from the relay node 2.

Through coordination of the base station, the two relay nodes do not send signals on SSB resources or CSI-RSs resource of each other, and the relay node configures the terminal to perform the joint measurement on signals of the two relay nodes, so that the terminal may be handed over between relay nodes by using the beam failure recovery method, and adapts to a high frequency band blockage which is easy to occur and lasts for a short time.

It should be noted that in this embodiment of this application, one relay node may receive resources of another relay node from the base station, or may directly receive resources of another relay node. For example, the relay node 2 or the relay node 3 in FIG. 1 may directly send the resources configured by the base station for the relay node 2 or the relay node 3 to the relay node 1. In this way, the relay node 1 may obtain the resources of the relay node 2 or the relay node 3.

Corresponding to the foregoing method embodiments, in the embodiments of this application, the first relay node and the terminal may be divided into functional modules. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

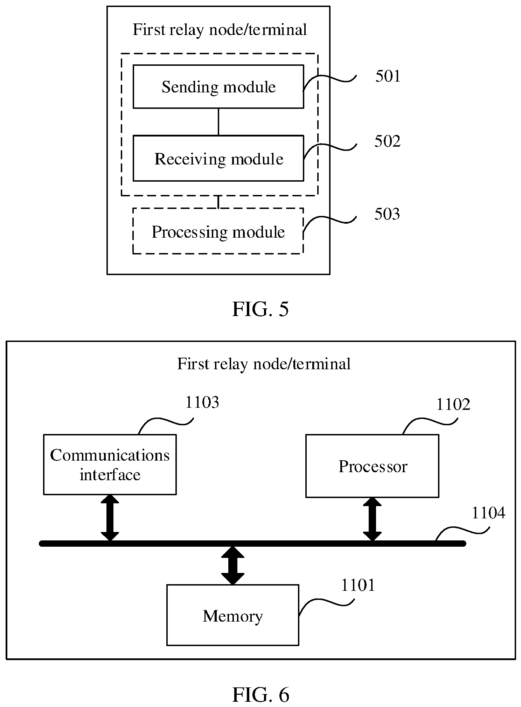

When each functional module is obtained through division based on each corresponding function, FIG. 5 is a possible schematic structural diagram of a first relay node or a terminal comprised by a system according to an embodiment. The first relay node or terminal includes a sending module 501 and a receiving module 502. The sending module 501 is configured to support related steps of sending data or information by the first relay node or the terminal in the method embodiment. For example, the sending module 501 is configured to support the first relay node in sending second information, or support the terminal in sending a message to a second relay node. The receiving module 502 is configured to support related steps of receiving the data or the information by the first relay node or the terminal. For example, the receiving module 502 is configured to support the first relay node in receiving first information or support the terminal in receiving the second information. Optionally, the first relay node or the terminal further includes a processing module 503, configured to support the first relay node or the terminal in performing a related step such as processing received information or to-be-sent information.

In hardware implementation, the processing module 503 may be a processor, a processing circuit, or the like. The sending module 501 may be a transmitter, a sending circuit, or the like. The receiving module 502 may be a receiver, a receiving circuit, or the like. The sending module 501 and the receiving module 502 may form a communications interface.

FIG. 6 is a possible schematic logical structural diagram of a first relay node or a terminal comprised by a system according to an embodiment. As shown in FIG. 6, the first relay node or the terminal includes a communications interface 603. In this embodiment of this application, the communications interface 603 is configured to support the first relay node or the terminal in communicating with another device other than the first relay node or the terminal. For example, the communications interface 603 is configured to support the first relay node in sending second information, support the terminal in sending a message to a second relay node, support the first relay node in receiving first information, support the terminal in receiving the second information, or the like. Optionally, the first device may further include a memory 601, a bus 604, and a processor 602. The processor 602 and the memory 601 may be connected to each other by using the bus 604. The processor 602 may be configured to support the first relay node or the terminal in performing a related step such as processing received information or to-be-sent information. The memory 601 is configured to store code and data of the first relay node or the terminal.

In specific implementation, the processor 602 may be a central processing unit, a general purpose processor, a digital signal processor, an application-specific integrated circuit, a field programmable gate array or another programmable logic device, a transistor logic device, a hardware component, or any combination thereof. The processor 602 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 604 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 6, but this does not mean that there is only one bus or only one type of the bus.

The foregoing mainly describes the solutions provided in the embodiments of this application from a perspective of interaction between network elements. It may be understood that, to implement the foregoing functions, the network elements such as the first relay node, the second relay node, and the terminal include corresponding hardware structures and/or software modules for performing the functions. A person of ordinary skill in the art should easily be aware that, in combination with the examples described in the embodiments disclosed in this specification, network elements and algorithm steps may be implemented by hardware or a combination of hardware and computer software. Whether a function is executed by hardware or hardware driven by computer software depends on particular applications and design constraints of the technical solutions. A person skilled in the art may use a different method to implement the described functions for each particular application, but it should not be considered that the implementation goes beyond the scope of this application.

A readable storage medium is further described. The readable storage medium stores a computer-executable instruction, and a device (which may be a single-chip microcomputer, a chip, or the like) or a processor may invoke the computer-executable instruction stored in the readable storage medium to perform the steps of the first relay node or the terminal in the method provided in FIG. 2 or FIG. 3. The foregoing readable storage medium may include any medium that can store program code, such as a USB flash drive, a removable hard disk, a read-only memory, a random access memory, a magnetic disk, or an optical disc.

A computer program product is further described. The computer program product includes a computer-executable instruction, and the computer-executable instruction is stored in a computer-readable storage medium. At least one processor of the device may read the computer-executable instruction from the computer-readable storage medium, and the at least one processor executes the computer-executable instruction, so that the device implements the steps of the first relay node or the terminal in the method provided in FIG. 2 or FIG. 3.

A communications system is further described . The communications system includes a plurality of devices, and the plurality of devices include the first relay node and the terminal. The first relay node or the terminal may be the device provided in FIG. 5 or FIG. 6.

A chip for implementing the method described in the foregoing embodiment (for example, FIG. 2 or FIG. 3) is further described. The chip includes a processing circuit and a transceiver circuit. The transceiver circuit may be, for example, an input/output interface, a pin, or a circuit. The processing circuit may execute a computer-executable instruction stored in a storage unit. The chip may further include a storage unit. The storage unit may be a register, a cache, or the like. Certainly, an additional storage unit may further be provided for the chip. For example, the storage unit may alternatively be a storage unit that is in a terminal or an access device and that is located outside the chip, such as a read-only memory (read-only memory, ROM), another type of static storage device that can store static information and an instruction, or a random access memory (random access memory, RAM). The chip may be applied to a base station or a relay node.

In still another aspect of this application, a system comprising a device is provided. The device includes a processor, and the processor runs code in a memory, to enable the device to perform the foregoing methods. The memory stores the code and data. The memory is located in the device, and the memory is coupled to the processor. The memory may alternatively be located outside the device.

It should be noted that, features relate to the apparatus embodiments may be obtained with reference to the foregoing method embodiments. For example, the first information and the second information are not described one by one in the apparatus part, but a person skilled in the art can easily obtain a corresponding apparatus based on the description in the method embodiments.

Finally, it should be noted that the foregoing descriptions are merely specific implementations of this application, but the protection scope is not limited thereto but defined by the claims..

All or some of the foregoing embodiments may be implemented by using software, hardware, firmware, or any combination thereof. When software is used to implement the embodiments, the embodiments may be implemented completely or partially in a form of computer program product. The computer program product includes one or more computer instructions. When the computer program instructions are loaded and executed on a computer, the procedure or functions according to the embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

In conclusion, the foregoing descriptions are merely example embodiments of this application, but are not intended to limit the protection scope defined by the claims.

## Claims

1. A relay transmission method, comprising:
receiving (201), by a first relay node, first information, wherein the first information comprises information about a second resource of a second relay node;
sending (202), by the first relay node, second information to a terminal, wherein the second information comprises the information about the second resource and information about a first resource of the first relay node;
receiving (203), by the terminal, the second information from the first relay node; and
sending (204), by the terminal, a message to the second relay node based on signals received from the first resource and the second resource, wherein the message is used to carry information about a part of the second resource, wherein
the first resource comprises at least one of: a synchronization signal block, SSB, resource, a channel state information-reference signal, CSI-RS, resource, a physical random access channel, PRACH, resource, a physical uplink control, PUCCH, resource, and a preamble sequence that are used for transmission between the first relay node and the terminal; and
the second resource comprises at least one of the SSB resource, the CSI-RS resource, the PRACH resource, the PUCCH resource, and the preamble sequence that are used for transmission between the second relay node and the terminal, wherein
the second information further comprises a beam failure trigger threshold, a maximum quantity of times of retransmission, a maximum quantity of times of power rampings, target received power, a retransmission power step, a time length of a beam failure measurement window, and a control resource set, CORESET, of a received beam failure recovery response that are of the second relay node.

2. The method according to claim 1, wherein
receiving, by the first relay node, the first information from a third node or the second relay node, wherein the third node is an upper-level node of the second relay node.

3. The method according to claim 1 or 2, wherein
skipping mapping, by the first relay node, a signal and/or a channel to the second resource; and/or
skipping mapping, by the terminal, a signal and/or a channel to the second resource.

4. The method according to any of claims 1 to 3, wherein
the first resource comprises at least one of: a synchronization signal block, SSB, resource, a channel state information-reference signal, CSI-RS, resource, a physical random access channel, PRACH, resource, a physical uplink control, PUCCH, resource, and a preamble sequence that are used for transmission between the first relay node and the terminal; and
the second resource comprises at least one of the SSB resource, the CSI-RS resource, the PRACH resource, the PUCCH resource, and the preamble sequence that are used for transmission between the second relay node and the terminal.

5. The method according to any of claims 1 to 4, wherein
the second information further comprises a beam failure trigger threshold, a maximum quantity of times of retransmission, a maximum quantity of times of power rampings, target received power, a retransmission power step, a time length of a beam failure measurement window, and a control resource set, CORESET, of a received beam failure recovery response that are of the first relay node and the second relay node.

6. A system comprising a relay transmission apparatus and a further relay transmission apparatus, wherein the relay transmission apparatus is a first relay node, the relay transmission apparatus comprising:
a receiving module (502), configured to receive first information, wherein the first information comprises information about a second resource of a second relay node; and
a sending module (501), configured to send second information to a terminal, wherein the second information comprises the information about the second resource and information about a first resource of the first relay node; wherein the further relay transmission apparatus is a terminal and comprises:
a receiving module, configured to receive the second information from the first relay node; and
a sending module, configured to send a message to the second relay node based on signals received from the first resource and the second resource, wherein the message is used to carry information about a part of the second resource, wherein
the first resource comprises at least one of a synchronization signal block, SSB, resource, a channel state information-reference signal, CSI-RS, resource, a physical random access channel, PRACH, resource, a physical uplink control, PUCCH, resource, and a preamble sequence that are used for transmission between the first relay node and the terminal; and
the second resource comprises at least one of the SSB resource, the CSI-RS resource, the PRACH resource, the PUCCH resource, and the preamble sequence that are used for transmission between the second relay node and the terminal, wherein
the second information further comprises a beam failure trigger threshold, a maximum quantity of times of retransmission, a maximum quantity of times of power rampings, target received power, a retransmission power step, a time length of a beam failure measurement window, and a control resource set, CORESET, of a received beam failure recovery response that are of the first relay node and the second relay node.

7. The system according to claim 6, wherein
the receiving module is further configured to receive, by the first relay node, the first information from a third node or the second relay node, wherein the third node is an upper-level node of the second relay node.

8. The system according to claim 6 or 7, wherein
the second information further comprises a beam failure trigger threshold, a maximum quantity of retransmission times, a maximum power increment quantity, target receive power, a retransmission power step, a time length of a beam failure measurement window, and a control resource set, CORESET, of a received beam failure recovery response that are of the second relay node.

9. The system according to any of claims 6 to 8, wherein
the first resource comprises at least one of: a synchronization signal block, SSB, resource, a channel state information-reference signal, CSI-RS, resource, a physical random access channel, PRACH, resource, a physical uplink control, PUCCH, resource, and a preamble sequence that are used for transmission between the first relay node and the terminal; and
the second resource comprises at least one of the SSB resource, the CSI-RS resource, the PRACH resource, the PUCCH resource, and the preamble sequence that are used for transmission between the second relay node and the terminal.

10. The system according to any of claims 6 to 9, further comprising the first relay node and the second relay node.

## Patentansprüche

1. Relaisübertragungsverfahren, umfassend:
Empfangen (201), durch einen ersten Relaisknoten, von ersten Informationen, wobei die ersten Informationen Informationen über ein zweites Betriebsmittel eines zweiten Relaisknotens umfassen;
Senden (202), durch den ersten Relaisknoten, von zweiten Informationen an ein Endgerät, wobei die zweiten Informationen die Informationen über das zweite Betriebsmittel und Informationen über ein erstes Betriebsmittel des ersten Relaisknotens umfassen;
Empfangen (203), durch das Endgerät, der zweiten Informationen von dem ersten Relaisknoten; und
Senden (204), durch das Endgerät, einer Nachricht an den zweiten Relaisknoten basierend auf Signalen, die von dem ersten Betriebsmittel und dem zweiten Betriebsmittel empfangen werden, wobei die Nachricht verwendet wird, Informationen über einen Teil des zweiten Betriebsmittels zu tragen, wobei das erste Betriebsmittel mindestens eines von Folgendem umfasst: ein Synchronisationssignalblock- bzw. SSB-Betriebsmittel, ein Kanalzustandsinformationen-Referenzsignal- bzw. CSI-RS-Betriebsmittel, ein Betriebsmittel eines physikalischen Direktzugriffskanals bzw. PRACH, ein Betriebsmittel einer physikalischen Aufwärtsstreckensteuerung bzw. PUCCH und eine Präambelsequenz, die für Übertragung zwischen dem ersten Relaisknoten und dem Endgerät verwendet werden; und
das zweite Betriebsmittel mindestens eines des SSB-Betriebsmittels, des CSI-RS-Betriebsmittels, des PRACH-Betriebsmittels, des PUCCH-Betriebsmittels und der Präambelsequenz, die für Übertragung zwischen dem zweiten Relaisknoten und dem Endgerät verwendet werden, umfasst, wobei
die zweiten Informationen ferner einen Strahlausfall-Auslöserschwellenwert, eine maximale Quantität von Neuübertragungsmalen, eine maximale Quantität von Leistungsanstiegsmalen, eine Zielempfangsleistung, eine Neuübertragung-Leistungsstufe, eine Zeitlänge eines Strahlausfall-Messfensters und einen Steuerungsbetriebsmittelsatz bzw. CORESET einer empfangenen Strahlausfall-Wiederherstellungsantwort, die zu dem zweiten Relaisknoten gehören, umfassen.

2. Verfahren nach Anspruch 1, wobei
Empfangen, durch den ersten Relaisknoten, der ersten Informationen von einem dritten Knoten oder dem zweiten Relaisknoten, wobei der dritte Knoten ein übergeordneter Knoten des zweiten Relaisknotens ist.

3. Verfahren nach Anspruch 1 oder 2, wobei
Auslassen der Abbildung, durch den ersten Relaisknoten, eines Signals und/oder eines Kanals auf das zweite Betriebsmittel; und/oder
Auslassen der Abbildung, durch das Endgerät, eines Signals und/oder eines Kanals auf das zweite Betriebsmittel.

4. Verfahren nach einem der Ansprüche 1 bis 3, wobei
das erste Betriebsmittel mindestens eines von Folgendem umfasst: ein Synchronisationssignalblock- bzw. SSB-Betriebsmittel, ein Kanalzustandsinformationen-Referenzsignal- bzw. CSI-RS-Betriebsmittel, ein Betriebsmittel eines physikalischen Direktzugriffskanals bzw. PRACH, ein Betriebsmittel einer physikalischen Aufwärtsstreckensteuerung bzw. PUCCH und eine Präambelsequenz, die für Übertragung zwischen dem ersten Relaisknoten und dem Endgerät verwendet werden: und
das zweite Betriebsmittel mindestens eines des SSB-Betriebsmittels, des CSI-RS-Betriebsmittels, des PRACH-Betriebsmittels, des PUCCH-Betriebsmittels und der Präambelsequenz, die für Übertragung zwischen dem zweiten Relaisknoten und dem Endgerät verwendet werden, umfasst.

5. Verfahren nach einem der Ansprüche 1 bis 4, wobei
die zweiten Informationen ferner einen Strahlausfall-Auslöserschwellenwert, eine maximale Quantität von Neuübertragungsmalen, eine maximale Quantität von Leistungsanstiegsmalen, eine Zielempfangsleistung, eine Neuübertragung-Leistungsstufe, eine Zeitlänge eines Strahlausfall-Messfensters und einen Steuerungsbetriebsmittelsatz bzw. CORESET einer empfangenen Strahlausfall-Wiederherstellungsantwort, die zu dem ersten Relaisknoten und dem zweiten Relaisknoten gehören, umfassen.

6. System, umfassend eine Relaisübertragungsvorrichtung und eine weitere Relaisübertragungsvorrichtung, wobei die Relaisübertragungsvorrichtung ein erster Relaisknoten ist, die Relaisübertragungsvorrichtung umfassend:
ein Empfangsmodul (502), konfiguriert zum Empfangen von ersten Informationen, wobei die ersten Informationen Informationen über ein zweites Betriebsmittel eines zweiten Relaisknotens umfassen; und
ein Sendemodul (501), konfiguriert zum Senden von zweiten Informationen an ein Endgerät, wobei die zweiten Informationen die Informationen über das zweite Betriebsmittel und Informationen über ein erstes Betriebsmittel des ersten Relaisknotens umfassen; wobei die weitere Relaisübertragungsvorrichtung ein Endgerät ist und umfasst:
ein Empfangsmodul, konfiguriert zum Empfangen der zweiten Informationen von dem ersten Relaisknoten; und
ein Sendemodul, konfiguriert zum Senden einer Nachricht an den zweiten Relaisknoten basierend auf Signalen, die von dem ersten Betriebsmittel und dem zweiten Betriebsmittel empfangen werden, wobei die Nachricht verwendet wird, Informationen über einen Teil des zweiten Betriebsmittels zu tragen, wobei das erste Betriebsmittel mindestens eines von Folgendem umfasst: ein Synchronisationssignalblock- bzw. SSB-Betriebsmittel, ein Kanalzustandsinformationen-Referenzsignal- bzw. CSI-RS-Betriebsmittel, ein Betriebsmittel eines physikalischen Direktzugriffskanals bzw. PRACH, ein Betriebsmittel einer physikalischen Aufwärtsstreckensteuerung bzw. PUCCH und eine Präambelsequenz, die für Übertragung zwischen dem ersten Relaisknoten und dem Endgerät verwendet werden; und
das zweite Betriebsmittel mindestens eines des SSB-Betriebsmittels, des CSI-RS-Betriebsmittels, des PRACH-Betriebsmittels, des PUCCH-Betriebsmittels und der Präambelsequenz, die für Übertragung zwischen dem zweiten Relaisknoten und dem Endgerät verwendet werden, umfasst, wobei
die zweiten Informationen ferner einen Strahlausfall-Auslöserschwellenwert, eine maximale Quantität von Neuübertragungsmalen, eine maximale Quantität von Leistungsanstiegsmalen, eine Zielempfangsleistung, eine Neuübertragung-Leistungsstufe, eine Zeitlänge eines Strahlausfall-Messfensters und einen Steuerungsbetriebsmittelsatz bzw. CORESET einer empfangenen Strahlausfall-Wiederherstellungsantwort, die zu dem ersten Relaisknoten und dem zweiten Relaisknoten gehören, umfassen.

7. System nach Anspruch 6, wobei
das Empfangsmodul ferner konfiguriert ist zum Empfangen, durch den ersten Relaisknoten, der ersten Informationen von einem dritten Knoten oder dem zweiten Relaisknoten, wobei der dritte Knoten ein übergeordneter Knoten des zweiten Relaisknotens ist.

8. System nach Anspruch 6 oder 7, wobei
die zweiten Informationen ferner einen Strahlausfall-Auslöserschwellenwert, eine maximale Quantität von Neuübertragungsmalen, eine maximale Leistungsinkrementquantität, eine Zielempfangsleistung, eine Neuübertragung-Leistungsstufe, eine Zeitlänge eines Strahlausfall-Messfensters und einen Steuerungsbetriebsmittelsatz bzw. CORESET einer empfangenen Strahlausfall-Wiederherstellungsantwort, die zu dem zweiten Relaisknoten gehören, umfassen.

9. System nach einem der Ansprüche 6 bis 8, wobei
das erste Betriebsmittel mindestens eines von Folgendem umfasst: ein Synchronisationssignalblock- bzw. SSB-Betriebsmittel, ein Kanalzustandsinformationen-Referenzsignal- bzw. CSI-RS-Betriebsmittel, ein Betriebsmittel eines physikalischen Direktzugriffskanals bzw. PRACH, ein Betriebsmittel einer physikalischen Aufwärtsstreckensteuerung bzw. PUCCH und eine Präambelsequenz, die für Übertragung zwischen dem ersten Relaisknoten und dem Endgerät verwendet werden; und
das zweite Betriebsmittel mindestens eines des SSB-Betriebsmittels, des CSI-RS-Betriebsmittels, des PRACH-Betriebsmittels, des PUCCH-Betriebsmittels und der Präambelsequenz, die für Übertragung zwischen dem zweiten Relaisknoten und dem Endgerät verwendet werden, umfasst.

10. System nach einem der Ansprüche 6 bis 9, ferner umfassend den ersten Relaisknoten und den zweiten Relaisknoten.

## Revendications

1. Procédé de transmission relais, comprenant :
la réception (201), par un premier noeud relais, de premières informations, dans lequel les premières informations comprennent des informations relatives à une deuxième ressource d'un deuxième noeud relais ;
l'envoi (202), par le premier noeud relais, de deuxièmes informations à un terminal, dans lequel les deuxièmes informations comprennent les informations relatives à la deuxième ressource et des informations relatives à une première ressource du premier noeud relais ;
la réception (203), par le terminal, des deuxièmes informations à partir du premier noeud relais ; et
l'envoi (204), par le terminal, d'un message au deuxième noeud relais en fonction de signaux reçus à partir de la première ressource et de la deuxième ressource, dans lequel le message sert à convoyer des informations relatives à une partie de la deuxième ressource, dans lequel
la première ressource comprend au moins : une ressource de bloc de signal de synchronisation, SSB, une ressource d'informations d'état de canal-signal de référence, CSI-RS, une ressource de canal physique d'accès aléatoire, PRACH, une ressource de commande de liaison montante physique, PUCCH, et une séquence de préambule qui sont utilisées pour une transmission entre le premier noeud relais et le terminal ; et
la deuxième ressource comprend au moins une de la ressource SSB, la ressource CSI-RS, la ressource PRACH, la ressource PUCCH et la séquence de préambule qui sont utilisées pour une transmission entre le deuxième noeud relais et le terminal, dans lequel
les deuxièmes informations comprennent en outre un seuil de déclenchement de défaillance de faisceau, une quantité maximale de retransmissions, une quantité maximale de rampes de puissance, la puissance reçue cible, un pas de puissance de retransmission, une durée d'une fenêtre de mesure de défaillance de faisceau et un ensemble de ressources de commande, CORESET, d'une réponse de reprise après défaillance de faisceau reçue qui se rapportent au deuxième noeud relais.

2. Procédé selon la revendication 1, dans lequel
la réception, par le premier noeud relais, des premières informations à partir d'un troisième noeud ou du deuxième noeud relais, dans lequel le troisième noeud est un noeud de niveau supérieur du deuxième noeud relais.

3. Procédé selon la revendication 1 ou 2, dans lequel
le saut d'un mappage, par le premier noeud relais, d'un signal et/ou d'un canal sur la deuxième ressource ; et/ou
le saut d'un mappage, par le terminal, d'un signal et/ou d'un canal sur la deuxième ressource.

4. Procédé selon l'une quelconque des revendications 1 à 3, dans lequel
la première ressource comprend au moins : une ressource de bloc de signal de synchronisation, SSB, une ressource d'informations d'état de canal-signal de référence, CSI-RS, une ressource de canal physique d'accès aléatoire, PRACH, une ressource de commande de liaison montante physique, PUCCH, et une séquence de préambule qui sont utilisées pour une transmission entre le premier noeud relais et le terminal ; et
la deuxième ressource comprend au moins une de la ressource SSB, la ressource CSI-RS, la ressource PRACH, la ressource PUCCH et la séquence de préambule qui sont utilisées pour une transmission entre le deuxième noeud relais et le terminal,.

5. Procédé selon l'une quelconque des revendications 1 à 4, dans lequel
les deuxièmes informations comprennent en outre un seuil de déclenchement de défaillance du faisceau, une quantité maximale de retransmissions, une quantité maximale de rampes de puissance, la puissance reçue cible, un pas de puissance de retransmission, une durée d'une fenêtre de mesure de défaillance de faisceau et un ensemble de ressources de commande, CORESET, d'une réponse de reprise après défaillance de faisceau reçue qui se rapportent au premier noeud relais et au deuxième noeud relais.

6. Système comprenant un appareil de transmission relais et un appareil de transmission relais supplémentaire, dans lequel l'appareil de transmission relais est un premier noeud relais, l'appareil de transmission relais comprenant :
un module de réception (502), configuré pour recevoir des premières informations, dans lequel les premières informations comprennent des informations relatives à une deuxième ressource d'un deuxième noeud relais ; et
un module d'envoi (501), configuré pour envoyer des deuxièmes informations à un terminal, dans lequel les deuxièmes informations comprennent les informations relatives à la deuxième ressource et des informations relatives à une première ressource du premier noeud relais ; dans lequel l'appareil de transmission relais supplémentaire est un terminal et comprend :
un module de réception, configuré pour recevoir les deuxièmes informations à partir du premier noeud relais ; et
un module d'envoi, configuré pour envoyer un message au deuxième noeud relais en fonction de signaux reçus à partir de la première ressource et de la deuxième ressource, dans lequel le message sert à convoyer des informations relatives à une partie de la deuxième ressource, dans lequel
la première ressource comprend au moins : une ressource de bloc de signal de synchronisation, SSB, une ressource d'informations d'état de canal-signal de référence, CSI-RS, une ressource de canal physique d'accès aléatoire, PRACH, une ressource de commande de liaison montante physique, PUCCH, et une séquence de préambule qui sont utilisées pour une transmission entre le premier noeud relais et le terminal ; et
la deuxième ressource comprend au moins une de la ressource SSB, la ressource CSI-RS, la ressource PRACH, la ressource PUCCH et la séquence de préambule qui sont utilisées pour une transmission entre le deuxième noeud relais et le terminal, dans lequel
les deuxièmes informations comprennent en outre un seuil de déclenchement de défaillance de faisceau, une quantité maximale de retransmissions, une quantité maximale de rampes de puissance, la puissance reçue cible, un pas de puissance de retransmission, une durée d'une fenêtre de mesure de défaillance de faisceau et un ensemble de ressources de commande, CORESET, d'une réponse de reprise après défaillance de faisceau reçue qui se rapportent au premier noeud relais et au deuxième noeud relais..

7. Système selon la revendication 6, dans lequel
le module de réception est configuré en outre pour recevoir, par le premier noeud relais, les premières informations à partir d'un troisième noeud ou du deuxième noeud relais, dans lequel le troisième noeud est un noeud de niveau supérieur du deuxième noeud relais.

8. Système selon la revendication 6 ou 7, dans lequel
les deuxièmes informations comprennent en outre un seuil de déclenchement de défaillance de faisceau, une quantité maximale de retransmissions, une quantité maximale de rampes de puissance, la puissance reçue cible, un pas de puissance de retransmission, une durée d'une fenêtre de mesure de défaillance de faisceau et un ensemble de ressources de commande, CORESET, d'une réponse de reprise après défaillance de faisceau reçue qui se rapportent au deuxième noeud relais.

9. Système selon l'une quelconque des revendications 6 à 8, dans lequel
la première ressource comprend au moins : une ressource de bloc de signal de synchronisation, SSB, une ressource d'informations d'état de canal-signal de référence, CSI-RS, une ressource de canal physique d'accès aléatoire, PRACH, une ressource de commande de liaison montante physique, PUCCH, et une séquence de préambule qui sont utilisées pour une transmission entre le premier noeud relais et le terminal ; et
la deuxième ressource comprend au moins une de la ressource SSB, la ressource CSI-RS, la ressource PRACH, la ressource PUCCH et la séquence de préambule qui sont utilisées pour une transmission entre le deuxième noeud relais et le terminal,.

10. Système selon l'une quelconque des revendications 6 à 9, comprenant en outre le premier noeud relais et le deuxième noeud relais.
